# EUROPEAN PATENT SPECIFICATION

(11) **EP 2 520 897 B1**
(45) Date of publication and mention of the grant of the patent: **09.07.2014**
(21) Application number: 12166744.8
(22) Date of filing: 04.05.2012
(51) Int. Cl.: F42B 5/155, B64D 1/02, F41B 11/681, B64D 7/00

(54) **Aircraft provided with a launch system for launching smoke markers**
Flugzeug mit einem Abschusssystem zum Abschießen von Rauchbomben
Aéronef pourvu d'un système de lancement pour le lancement de bougies fumigènes

(30) Priority: 05.05.2011 IT TO20110398
(43) Date of publication of application: 07.11.2012
(73) Proprietor: Alenia Aermacchi S.p.A., 21040 Venegono Superiore (Varese) (IT)
(72) Inventor: Amerio, Massimo, I-10129 Torino (IT)
(74) Representative: Rondano, Davide

(56) References cited:
- WO-A1-01/86224
- WO-A1-2010/003496
- FR-A- 931 787
- US-A- 3 547 000
- US-A- 4 938 115
- US-A- 5 333 528

## Description

The present invention relates to an aircraft provided with a system for launching smoke markers.

The use on aircrafts of systems for launching smoke markers, for example, in order to provide a reference point, both in daytime and in the night, during rescue operations, is known. According to the prior art, such known launch systems are mounted on the aircraft so as to launch the smoke markers in the flying direction of the aircraft. This makes it difficult to accurately launch the smoke marker in the interest point to be signalled, and forces the aircraft to fly again over the area in which such a point is located. Furthermore, the known launching systems use gunpowder for launching the smoke marker. However, the use of gunpowder involves safety risks for the aircraft, thus requiring measures to minimize such risks.

Such drawbacks are solved in the launch system known from US 5,333,528, which is intended to be installed onto an aircraft for launching missiles (but which could also be used for launching smoke markers) in a direction opposite to the flying direction of the aircraft. Furthermore, such known launch system comprises a gun adapted to receive a smoke marker to be launched, and propelling means arranged to generate a thrust onto the smoke marker to launch it from the gun, wherein the gun comprises a barrel arranged to guide the smoke marker in the first phase of the launch, and wherein the propelling means are compressed-air propelling means using air bags intended to be inflated by compressed air.

It is an object of the present invention to propose an aircraft provided with an improved system for launching smoke markers type compared to the above-discussed prior art.

Such an object is fully achieved according to the present invention by virtue of a system for launching smoke markers having the characteristics defined in the annexed independent claim 1.

Further advantageous characteristics of the invention are indicated in the dependent claims, the content of which is to be meant as an integral and integrant part of the description provided herein below.

Further characteristics and advantages of the invention will be more clearly understood from the following detailed description, given purely by way of non-limiting example, with reference to the annexed drawings, in which:
Figs. 1A and 1B are an elevation side view and a top view, respectively, showing schematically the tail of an aircraft provided with a system for launching smoke markers according to the invention;
Fig. 2 is a schematic illustration showing the architecture of the launch system installed on the aircraft shown in Figs. 1A and 1B;
Fig. 3 is a perspective view showing the gun of the launch system of Fig. 2, with the connection member in the open position, as well as the smoke marker with its corresponding container;
Figs. 4A and 4B show a thrust lever which is part of the locking mechanism associated to the connection member of the gun of Fig. 3, in the unlocking position and the locking position, respectively;
Fig. 5 is a view similar to that of Fig. 3, but referring to a gun provided with a different type of locking mechanism associated to the connection member; and
Fig. 6 shows a lever which is part of the locking mechanism associated to the connection member of the gun of Fig. 5, in the locking position.

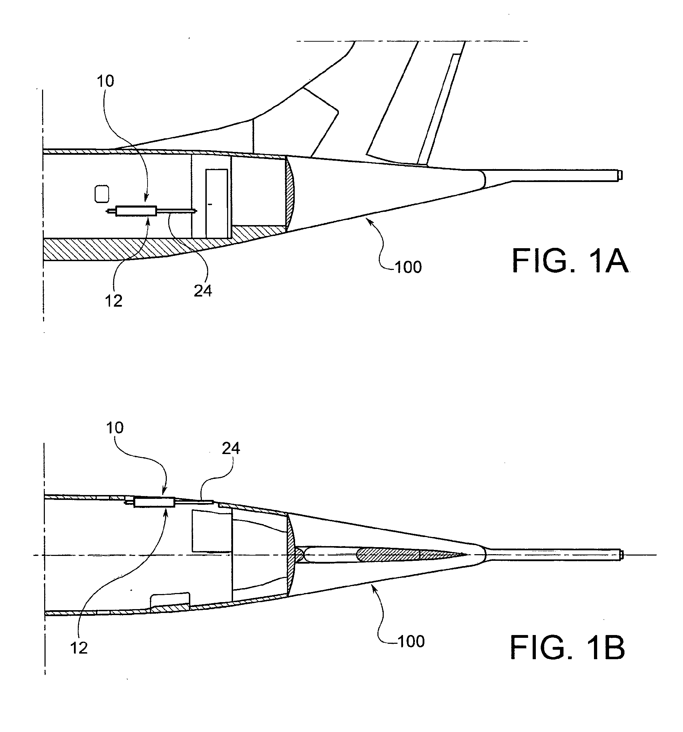

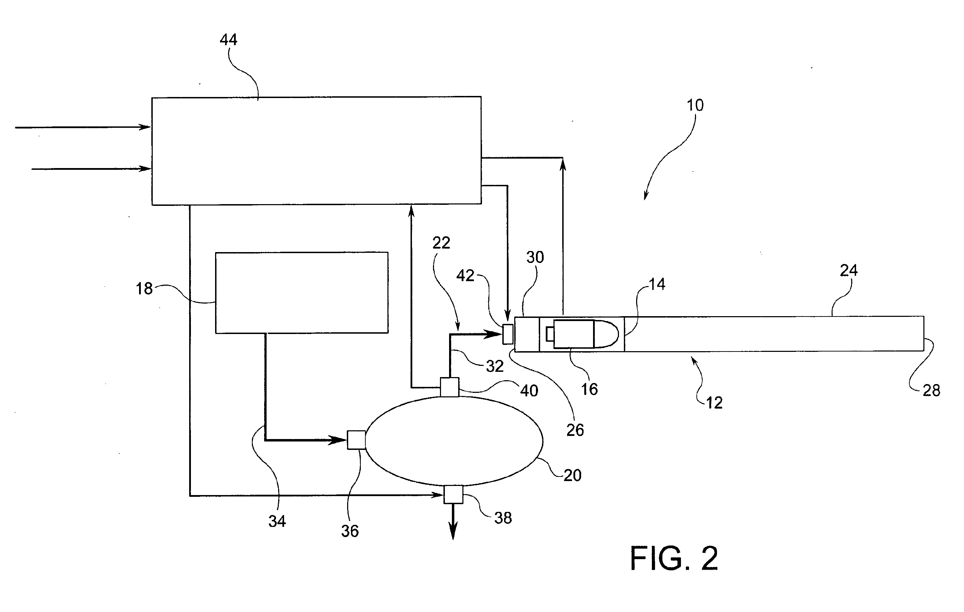

Referring first to Figs. 1A, 1B, and 2, a launch system for launching smoke markers, hereinafter referred to only as launch system for simplicity, installed onto an aircraft 100, in particular in the tail area of the aircraft is generally indicated 10. The launch system 10 basically comprises a gun 12 arranged to be loaded with a container 14 containing a smoke marker 16 to be launched, an air compressor 18 arranged to generate compressed air at a given pressure, a reservoir 20 for storing the compressed air generated by the air compressor 18, and a supply device 22 arranged to deliver the compressed air stored in the reservoir 20 in a controlled way to the gun 12 for the launch of the smoke marker 16.

The gun 12 comprises a barrel 24, intended to guide the smoke marker 16 in the first phase of the launch, that is, immediately after that the smoke marker 16 has left the container 14. The barrel 24 has an inlet 26, through which the smoke marker 16 enters the barrel immediately after leaving the container 14, and an outlet 28 through which the smoke marker 16 is projected from the barrel. The gun 12 further comprises a connection member 30 connected on the one hand to a compressed air supply conduit 32, in turn connected to the reservoir 20, and on the other hand to the container 14, particularly to the end of the container 14 opposite to the barrel 24. As it will be better explained in the following part of the description, the connection member 30 is arranged to be moved along the direction of the axis of the barrel 24 (referred to as the axial direction herein below) between a closed position, or operative position, and an open position, or non-operative position.

The air compressor 18 is connected to the reservoir 20 by a delivery conduit 34 to store the compressed air generated at a given pressure in the reservoir 20. By way of example, in order to launch the smoke marker from the aircraft at a speed of 90 m/s with a barrel having a length of 1.5 m, an air pressure of about 10 bars shall be provided for. Advantageously, a solenoid valve 36 provided on the delivery conduit 34 controls the compressed air flow from the air compressor 18 to the reservoir 20. Furthermore, the reservoir 20 is advantageously provided with a vent valve 38 arranged to discharge compressed air from the reservoir. Two further solenoid valves 40 and 42 are provided on the supply conduit 32, on the reservoir 20 side and on the connection member 30 side, respectively.

The launch system 10 further comprises an electronic control unit 44 arranged to manage the operation of the launch system. The electronic control unit 44 is connected to the air compressor 18 so as to receive information from the air compressor about its operative state, and to send control signals to control the supply and cause the activation thereof. For example, the electronic control unit 44 will cause the activation of the air compressor 18 in the presence of an air pressure level signal in the reservoir 20, which is lower than a preset minimum threshold, and will cause the deactivation of the air compressor when a given air pressure level has been reached in the reservoir. The electronic control unit 44 is further connected to the solenoid valve 40 to receive a pressure signal indicative of the pressure in the reservoir 20 and to control the inflow of the compressed air from the reservoir 20 to the supply conduit 32 through this solenoid valve. The electronic control unit 44 is further connected to the vent valve 38 in order to cause the opening thereof, when needed, depending, for example, on the pressure value in the reservoir 20. The electronic control unit 44 is further connected to the solenoid valve 42 to control the inflow of compressed air from the supply conduit 32 to the gun 12 through this solenoid valve in order to operate the launch of the smoke marker 16. The electronic control unit 44 is further connected to suitable sensors provided for on the gun 12 to receive suitable release signals, for example relating to the presence of the smoke marker 16 and the proper locking of the container 14 in the gun, so as to cause the launch of the smoke marker only in the presence of such release signals.

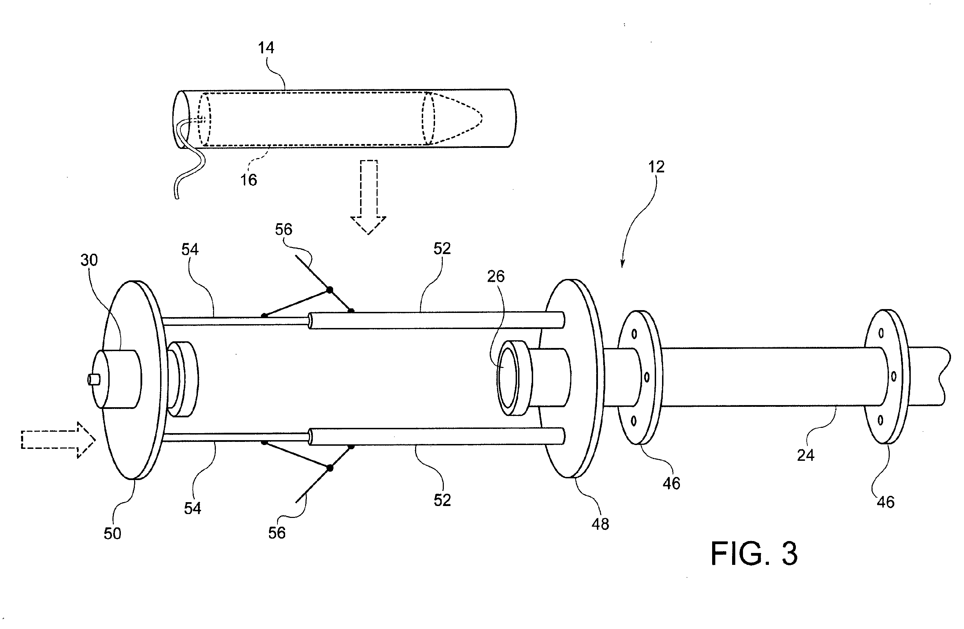

Referring now to Figs. 3 to 6, the structure of the gun 12, and particularly the locking mechanism by means of which the container 14 with the smoke marker 16 is locked into the gun, will be described.

The barrel 24 is provided with attachment flanges 46 for securing the gun to the structure of the aircraft 100. In this regard, as shown in Figs. 1A and 1B, the launch system is installed on the aircraft 100 with the outlet 28 of the barrel 24 facing backwards, so that the smoke marker 16 is launched in a direction opposite to the flying direction of the aircraft. Furthermore, the electronic control unit 44 is arranged to launch the smoke marker 16 with such a speed as to ensure that it will fall substantially at the interest point to be signalled. This means that, when the aircraft 100 is flying along a substantially horizontal direction, the smoke marker 16 is launched by the launch system 10 with a speed that is substantially the same as that of the aircraft.

An additional flange 48 is further secured to the barrel 24, specifically in the end area on the side of the inlet 26. A similar flange 50 is secured to the connection member 30. Guide means are provided between the two flanges 48 and 50 and are arranged to guide the translation movement of the connection member 30 relative to the barrel 24 along the axial direction between the above-mentioned open and closed positions. According to the embodiment proposed herein, the guide means are made as telescopic means and, in this regard, they comprise a plurality of cylinders 52 (two cylinders, in the illustrated example) secured to the flange 48, i.e. to the barrel 24, and a corresponding plurality of rods 54, each of which is slidably arranged in a respective cylinder 52 and is secured to the flange 50, i.e. to the connection member 30. It is apparent that the arrangement of the cylinders 52 and the rods 54 could be inverted compared to the one proposed herein, in that the cylinders 52 could be secured to the flange 50 and the rods could be secured to the flange 48. In the closed position, the connection member 30 seals the container 14 against the inlet 26 of the barrel 24. In this regard, both the connection member 30 and the inlet 26 of the barrel 24 are provided with corresponding gaskets (not shown) for a sealing coupling to the container 14. In the open position, the connection member 30 faces away from the barrel 24 compared to the closed position, so as to allow the insertion of the container 14 into the gun 12.

In order to ensure the locking of the connection member 30 in the closed position, the gun 12 further comprises a manual locking mechanism comprising a plurality (advantageously, one pair, as in the illustrated example, so as to be able to be simultaneously actuated by only one operator) of dead-point levers 56 configured so that the dead-point position of such levers corresponds to the closed position of the connection member.

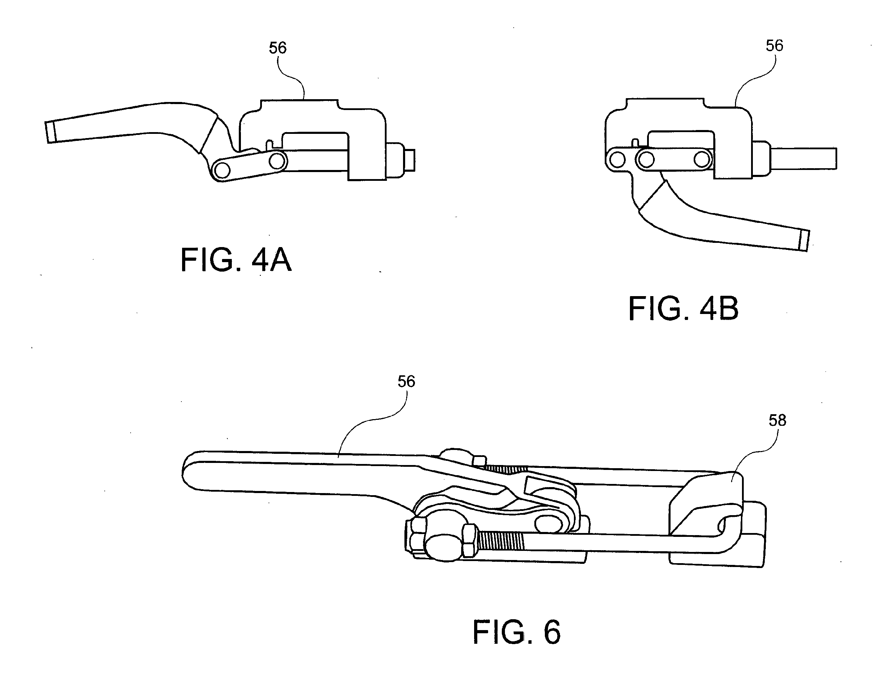

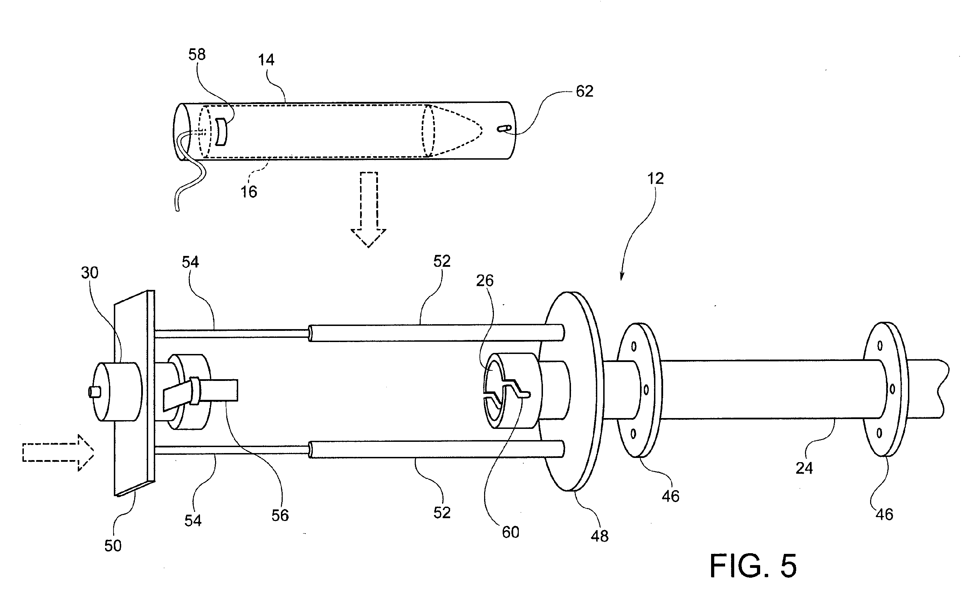

According to the embodiment of Fig. 3, the dead-point levers 56 are mounted onto the guide means 52, 54 to act on the one hand onto the connection member 30 and on the other hand onto the barrel 24. More precisely, each dead-centre lever 56 is mounted so as to act on the one hand on a respective rod 54, which is drivingly connected for axial translation to the connection member 30, and on the other hand on a respective cylinder 52, which is drivingly connected to the barrel 24. An example of a dead-centre lever 56 usable in the locking mechanism of Fig. 3 is shown in Figs. 4A and 4B, in an unlocking position (in which it allows the movement in the axial direction of the connection member 30 between the open position and the closed position) and in a locking position (dead-centre position), in which it locks the connection member 30 in the closed position, respectively. According to the embodiment of Fig. 5, instead, the dead-point levers 56 are mounted onto the connection member 30 and cooperate each with a respective coupling element 58 secured to the container 14. An example of a dead-centre lever 56 usable in the locking mechanism of Fig. 5 is shown - in the locking position - in Fig. 6. Furthermore, in the embodiment of Fig. 5, the end portion of the barrel 24 on the side of the inlet 26 has a guide slot 60 arranged to receive a guide pin 62 which is secured to the container 14 to guide the container in the loading step within the gun 12.

Naturally, the principle of the invention remaining unchanged, the embodiments and the implementation details could widely vary from those described and illustrated purely by way of non-limiting example.

For example, the guide means arranged to guide the connection member in the axial translation movement between the open position and the closed position could be produced in a different way compared to that described and illustrated herein, as well as the locking means arranged to lock the connection member in the closed position.

Furthermore, the installation position of the launch system could be different from the one shown in the figures annexed herein.

## Claims

1. Aircraft (100) provided with a launch system (10) for launching smoke markers (16), wherein the launch system (10) is installed so as to launch the smoke marker (16) in a direction opposite to the flying direction of the aircraft (100), wherein the launch system (10) comprises a gun (12) and propelling means (18, 20, 22) arranged to generate a thrust onto the smoke marker (16) to launch it from the gun (12) with a given speed, wherein the gun (12) comprises a barrel (24) arranged to guide the smoke marker (16) in the first phase of the launch, and wherein said propelling means (18, 20, 22) are compressed-air propelling means,
**characterized in that** the gun (12) is adapted to receive a container (14) containing the smoke marker (16) to be launched, and **in that** said propelling means (18, 20, 22) comprise an air compressor (18) arranged to generate compressed air at a given pressure, a reservoir (20) for storing the compressed air generated by the air compressor (18), and supply means (22) arranged to supply in a controlled manner the compressed air stored in the reservoir (20) to the gun (12).

2. Aircraft according to claim 1, wherein the barrel (24) of the gun (12) has an inlet (26) through which the smoke marker (16) enters the barrel (24), and an outlet (28) through which the smoke marker (16) is projected from the barrel (24), as well as a connection member (30) arranged to be connected on the one hand to a compressed air supply conduit (32) being part of said supply means (22) and which is, in turn, connected to the reservoir (20), and on the other hand to the end of the container (14) facing opposite to the barrel (24), and wherein the connection member (30) is arranged to be moved along the direction of the axis of the barrel (24) between a closed position, in which it connects the container (14) to the supply means (22) to allow the delivery of compressed air into the container (14), and an open position, in which it is positioned at a greater distance from the barrel (24) than in the closed position in order to allow the insertion of the container (14) between the connection member (30) and the barrel (24).

3. Aircraft according to claim 2, wherein the gun (12) further comprises locking means (56) arranged to ensure the locking of the connection member (30) in the closed position.

4. Aircraft according to claim 3, wherein said locking means (56) comprise at least one dead-centre lever configured in such a manner that the dead-centre position of the lever corresponds to the closed position of the connection member (30).

5. Aircraft according to claim 3 or claim 4, wherein said locking means (56) are arranged to act on the one hand onto the connection member (30), or onto another element (54) drivingly connected for axial translation therewith, and on the other hand onto the barrel (24), or onto another element (52) drivingly connected therewith.

6. Aircraft according to claim 3 or claim 4, wherein said locking means (56) are arranged to act on the one hand onto the connection member (30), or onto another element drivingly connected for axial translation therewith, and on the other hand directly onto the container (14).

7. Aircraft according to any of claims 2 to 6, wherein the gun further comprises guide means (52, 54) interposed between the connection member (30) and the barrel (24) to guide the movement of the connection member (30) between the open position and the closed position.

8. Aircraft according to claim 7, wherein said guide means (52, 54) are made as telescopic means and comprise a plurality of cylinders (52) directly or indirectly fixed to the connection member (30) or to the barrel (24), and a corresponding plurality of rods (54) each of which is slidably arranged in a respective cylinder (52) and is directly or indirectly fixed to the barrel (24) or to the connection member (30), respectively.

9. Aircraft according to any of the preceding claims, wherein said propelling means (18, 20, 22) further comprise first valve means (36) arranged to control the compressed air flow from the air compressor (18) to the reservoir (20), and second valve means (40, 42) arranged to control the compressed air flow from the reservoir (20) to the gun (12).

10. Aircraft according to claim 9, further comprising an electronic control unit (44) connected to the air compressor (18) and to said first and second valve means (36, 40, 42).

11. Aircraft according to claim 10, wherein the electronic control unit (44) is arranged to control the air compressor (18) and said first and second valve means (36, 40, 42) so as to launch the smoke marker (16), when the aircraft (100) is flying along a substantially horizontal direction, with a speed equal to that of the aircraft (100).

## Patentansprüche

1. Flugzeug (100), das mit einem Abschusssystem (10) zum Abschießen von Rauchbomben (16) versehen ist, wobei das Abschusssystem (10) installiert ist, um die Rauchbombe (16) in eine zu der Flugrichtung des Flugzeugs (100) entgegengesetzte Richtung abzuschießen, wobei das Abschusssystem (10) eine Kanone (12) und Antriebsmittel (18, 20, 22) umfasst, die eingerichtet sind, um einen Axialschub auf die Rauchbombe (16) zu erzeugen, um sie mit einer vorgegebenen Geschwindigkeit von der Kanone (12) abzuschießen, wobei die Kanone (12) einen Lauf (24) umfasst, der eingerichtet ist, um die Rauchbombe (16) in der ersten Phase des Abschusses zu führen, und wobei die Antriebsmittel (18, 20, 22) Druckluftantriebsmittel sind,
**dadurch gekennzeichnet, dass** die Kanone (12) geeignet ist, einen Behälter (14) aufzunehmen, der die Rauchbombe (16), die abgeschossen werden soll, enthält, und dass die Antriebsmittel (18, 20, 22) umfassen: einen Luftverdichter (18), der eingerichtet ist, um Druckluft mit einem vorgegebenen Druck zu erzeugen, einen Vorratsbehälter (20) zum Lagern der von dem Luftverdichter (18) erzeugten Druckluft, und Zuführungsmittel (22), die eingerichtet sind, um die in dem Vorratsbehälter (20) gelagerte Druckluft in einer gesteuerten Weise an die Kanone (12) zuzuführen.

2. Flugzeug nach Anspruch 1, wobei der Lauf (24) der Kanone (12) hat:
einen Einlass (26), durch den die Rauchbombe (16) in den Lauf (24) eintritt, und einen Auslass (28), durch den die Rauchbombe (16) aus dem Lauf (24) ausgestoßen wird, ebenso wie ein Verbindungselement (30), das eingerichtet ist, um einerseits mit einer Druckluftzuführungsleitung (32), die Teil der Zuführungsmittel (22) ist und ihrerseits mit dem Vorratsbehälter (20) verbunden ist, und andererseits mit dem Ende des Behälters (14), das entgegengesetzt zu dem Lauf (24) ist, verbunden zu sein, und wobei das Verbindungselement (30) eingerichtet ist, um entlang der Richtung der Achse des Laufs (24) zwischen einer geschlossenen Position, in der es den Behälter (14) mit den Zuführungsmitteln (22) verbindet, um die Abgabe von Druckluft in den Behälter (14) zuzulassen, und einer offenen Position, in der es in einem größeren Abstand von dem Lauf (24) als in der geschlossenen Position positioniert ist, um das Einsetzen des Behälters (14) zwischen dem Verbindungselement (30) und dem Lauf (24) zuzulassen, verschoben zu werden.

3. Flugzeug nach Anspruch 2, wobei die Kanone (12) ferner Sperrmittel (56) umfasst, die eingerichtet sind, um das Sperren des Verbindungselements (30) in der geschlossenen Position sicherzustellen.

4. Flugzeug nach Anspruch 3, wobei die Sperrmittel (56) wenigstens einen Totpunkthebel umfassen, der in einer derartigen Weise aufgebaut ist, dass die Totpunktposition des Hebels der geschlossenen Position des Verbindungselements (30) entspricht.

5. Flugzeug nach Anspruch 3 oder Anspruch 4, wobei die Sperrmittel (56) eingerichtet sind, um einerseits auf das Verbindungselement (30) oder auf ein anderes Element (54), das antreibend verbunden ist, zu wirken und andererseits auf den Lauf (24) oder ein anderes Element (52), das antreibend damit verbunden ist, zu wirken.

6. Flugzeug nach Anspruch 3 oder Anspruch 4, wobei die Sperrmittel (56) eingerichtet sind, um einerseits auf das Verbindungselement (30) oder auf ein anderes Element, das für eine Axialverschiebung direkt damit verbunden ist, zu wirken, und andererseits direkt auf den Behälter (14) zu wirken.

7. Flugzeug nach einem der Ansprüche 2 bis 6, wobei die Kanone ferner Führungsmittel (52, 54) umfasst, die zwischen dem Verbindungselement (30) und dem Lauf (24) eingefügt sind, um die Bewegung des Verbindungselements (30) zwischen der offenen Position und der geschlossenen Position zu führen.

8. Flugzeug nach Anspruch 7, wobei die Führungsmittel (52, 54) als Teleskopmittel gefertigt sind und eine Vielzahl von Zylindern (52), die direkt oder indirekt an dem Verbindungselement (30) oder an dem Lauf (24) befestigt sind, und eine entsprechende Vielzahl von Stangen (54) umfassen, von denen jede verschiebbar in einem jeweiligen Zylinder (52) angeordnet ist und jeweils direkt oder indirekt an dem Lauf (24) oder dem Verbindungselement (30) befestigt ist.

9. Flugzeug nach einem der vorhergehenden Ansprüche, wobei die Antriebsmittel (18, 20, 22) ferner umfassen: erste Ventilmittel (36), die eingerichtet sind, um den Druckluftstrom von dem Luftverdichter (18) zu dem Vorratsbehälter (20) zu steuern, und zweite Ventilmittel (40, 42), die eingerichtet sind, um den Druckluftstrom von dem Vorratsbehälter (20) zu der Kanone (12) zu steuern.

10. Flugzeug nach Anspruch 9, das ferner eine elektronische Steuereinheit (44) umfasst, die mit dem Luftverdichter (18) und mit den ersten und zweiten Ventilmitteln (36, 40, 42) verbunden ist.

11. Flugzeug nach Anspruch 10, wobei die elektronische Steuereinheit (44) eingerichtet ist, um den Luftverdichter (18) und die ersten und zweiten Ventilmittel (36, 40, 42) zu steuern, um die Rauchbombe (16) abzuschießen, wenn das Flugzeug (100) mit einer Geschwindigkeit gleich der des Flugzeugs (100) entlang einer im Wesentlichen horizontalen Richtung fliegt.

## Revendications

1. Aéronef (100) pourvu d'un système de lancement (10) pour lancer des balises fumigènes (16), dans lequel le système de lancement (10) est installé de manière à lancer la balise fumigène (16) dans une direction opposée à la direction de vol de l'aéronef (100), dans lequel le système de lancement (10) comprend un canon (12) et un moyen de propulsion (18, 20, 22) agencé pour générer une poussée sur la balise fumigène (16) destinée à la lancer hors du canon (12) avec une vitesse donnée, dans lequel le canon (12) comprend un tube (24) agencé pour guider la balise fumigène (16) dans la première phase du lancement, et dans lequel ledit moyen de propulsion (18, 20, 22) est un moyen de propulsion à air comprimé,
**caractérisé en ce que** le canon (12) est adapté pour recevoir un récipient (14) contenant la balise fumigène (16) à lancer et **en ce que** ledit moyen de propulsion (18, 20, 22) comprend un compresseur d'air (18) agencé pour générer de l'air comprimé à une pression donnée, un réservoir (20) pour stocker l'air comprimé généré par le compresseur d'air (18), et un moyen d'alimentation (22) agencé pour fournir de manière contrôlée au canon (12) l'air comprimé stocké dans le réservoir (20).

2. Aéronef selon la revendication 1, dans lequel le tube (24) du canon (12) a une entrée (26) par laquelle la balise fumigène (16) entre dans le tube (24), et une sortie (28) par laquelle la balise fumigène (16) est projetée hors du tube (24), ainsi qu'un élément de connexion (30) agencé pour être connecté d'une part à une conduite d'alimentation en air comprimé (32) faisant partie dudit moyen d'alimentation (22) et qui est lui-même connecté au réservoir (20), et d'autre part à l'extrémité du récipient (14) située à l'opposé du tube (24), et dans lequel l'élément de connexion (30) est agencé pour être déplacé le long de la direction de l'axe du tube (24) entre une position fermée, dans laquelle il relie le récipient (14) au moyen d'alimentation (22) pour permettre la distribution d'air comprimé dans le récipient (14), et une position ouverte, dans laquelle il est positionné à une plus grande distance du tube (24) que dans la position fermée afin de permettre l'insertion du récipient (14) entre l'élément de connexion (30) et le tube (24).

3. Aéronef selon la revendication 2, dans lequel le canon (12) comprend en outre un moyen de verrouillage (56) agencé pour assurer le verrouillage de l'élément de connexion (30) dans la position fermée.

4. Aéronef selon la revendication 3, dans lequel ledit moyen de verrouillage (56) comprend au moins un levier à point mort configuré de telle manière que la position de point mort du levier correspond à la position fermée de l'élément de connexion (30).

5. Aéronef selon la revendication 3 ou 4, dans lequel ledit moyen de verrouillage (56) est agencé pour agir d'une part sur l'élément de connexion (30), ou sur un autre élément (54) connecté en entraînement pour suivre une translation axiale avec celui-ci, et d'autre part sur le tube (24), ou sur un autre élément (52) connecté en entraînement avec celui-ci.

6. Aéronef selon la revendication 3 ou 4, dans lequel ledit moyen de verrouillage (56) est agencé pour agir d'une part sur l'élément de connexion (30), ou sur un autre élément connecté en entraînement pour suivre une translation axiale avec celui-ci, et d'autre part directement sur le récipient (14).

7. Aéronef selon l'une quelconque des revendications 2 à 6, dans lequel le canon comprend en outre un moyen de guidage (52, 54) intercalé entre l'élément de connexion (30) et le tube (24) pour guider le mouvement de l'élément de connexion (30) entre la position ouverte et la position fermée.

8. Aéronef selon la revendication 7, dans lequel ledit moyen de guidage (52, 54) se présente sous la forme d'un moyen télescopique et comprend une pluralité de cylindres (52) fixés directement ou indirectement à l'élément de connexion (30) ou au tube (24), et une pluralité correspondante de tiges (54) placées chacune de façon glissante dans un cylindre respectif (52) et fixées directement ou indirectement respectivement au tube (24) ou à l'élément de connexion (30).

9. Aéronef selon l'une quelconque des revendications précédentes, dans lequel ledit moyen de propulsion (18, 20, 22) comprend en outre un premier moyen formant vanne (36) agencé pour commander le débit d'air comprimé du compresseur d'air (18) vers le réservoir (20), et un deuxième moyen formant vanne (40, 42) agencé pour commander le débit d'air comprimé du réservoir (20) vers le canon (12).

10. Aéronef selon la revendication 9, comprenant en outre une unité de commande électronique (44) connectée au compresseur d'air (18) et auxdits premier et deuxième moyens formant vannes (36, 40, 42).

11. Aéronef selon la revendication 10, dans lequel l'unité de commande électronique (44) est agencée pour commander le compresseur d'air (18) et lesdits premier et deuxième moyens formant vannes (36, 40, 42) de façon à lancer la balise fumigène (16), quand l'aéronef (100) vole le long d'une direction substantiellement horizontale, avec une vitesse égale à celle de l'aéronef (100).
